(19) Europäisches Patentamt
European Patent Office
Office européen des brevets

(11) EP 1 857 722 A1

(12) EUROPEAN PATENT APPLICATION
published in accordance with Art. 158(3) EPC

(43) Date of publication:
21.11.2007 Bulletin 2007/47

(51) Int Cl.:
F16L 9/02 (2006.01)      B21C 1/24 (2006.01)
B21C 37/08 (2006.01)     B21D 17/04 (2006.01)
F15D 1/06 (2006.01)

(21) Application number: 06713980.8

(22) Date of filing: 17.02.2006

(86) International application number:
PCT/JP2006/302839

(87) International publication number:
WO 2006/088138 (24.08.2006 Gazette 2006/34)

(84) Designated Contracting States:
DE FR IT SE

(30) Priority: 17.02.2005 JP 2005040026

(71) Applicant: SUMITOMO METAL INDUSTRIES, LTD.
Osaka-shi,
Osaka 541-0041 (JP)

(72) Inventors:
• TAKEISHI, Yoshiaki
4-chome, Chuo-ku, Osaka-shi, Osaka, 54 (JP)
• AMAYA, Hisashi
4-chome, Chuo-ku, Osaka-shi, Osaka, 54 (JP)

• UEDA, Masakatsu
4-chome, Chuo-ku, Osaka-shi, Osaka, 54 (JP)
• TAKABE, Hideki
4-chome, Chuo-ku, Osaka-shi, Osaka, 54 (JP)
• KIMURA, Shigemitsu
4-chome, Chuo-ku, Osaka-shi, Osaka, 54 (JP)

(74) Representative: Jackson, Martin Peter et al
J.A. Kemp & Co.,
14 South Square,
Gray's Inn
London WC1R 5JJ (GB)

(54) **METAL PIPE AND METHOD FOR MANUFACTURING SAME**

(57) A metal pipe according to the invention has a plurality of ridges that have different heights, extend in the axial direction, and are arranged in the circumferential direction at its inner circumferential surface. If the Reynolds number changes and the streak structure and the scale of a hairpin vortex change, the streak and the hairpin vortex each match any one of the ridges. Therefore, the fluid friction can be reduced in a wide Reynolds number range.

FIG.1

**Description**

TECHNICAL FIELD

The present invention relates to a metal pipe used to transport a fluid such as water, petroleum, air, and natural gas, and a manufacturing method thereof, and more particularly to a metal pipe for use in an oil well, a gas well, or a geothermal well and a manufacturing method thereof.

BACKGROUND ART

When a fluid is passed through a metal pipe, typically a line pipe or an oil country tubular good, there are energy losses caused by fluid friction. If the fluid friction in the line pipe can be reduced, the transporting power can be reduced, and the transporting efficiency can be improved. If the fluid friction in a metal pipe for use in an oil well, a gas well, or a geothermal well can be reduced, the productivity of the fluid such as oil, gas, and steam can be improved, and the use of a metal pipe having a smaller size than the conventional pipes allows the drilling cost to be reduced.

As a measure to reduce such fluid friction in a pipe, a pipe having a plurality of irregularities at the inner circumferential surface has been suggested. JP 11-190471 A (hereinafter referred to as "Patent Document 1") discloses a pipe having a plurality of recesses and ridges at the inner circumferential surface and a pipe having a plurality of grooves at the inner circumferential surface. According to the disclosure of Patent Document 1, the shapes of the inner circumferential surfaces cause a plurality of vortices to be generated at the boundary between a high speed part of the fluid passed at the inner center of the pipe and a low speed part of the fluid passed near the wall of the pipe, which reduces the fluid friction. It is considered however that the vortices increase the energy loss and could increase the fluid friction on the contrary

JP 2000-97211 A (hereinafter referred to as "Patent Document 2") discloses a metal pipe having a sheet attached to the inner circumferential surface and the sheet has a plurality of riblets extending in the axial direction of the pipe. Herein, "the plurality of riblets" means a plurality of ridges identical in size and shape and arranged at equal intervals. In the disclosure of Patent Document 2, the dimensionless height $h^+$ of the riblets represented by expression (1) is from 1 to 20.

$$h^+ = \frac{hU_r}{\nu} \qquad \ldots (1)$$

where h is the height (m) of the riblets, Ur is a friction velocity (m/s), and v is the kinematic viscosity coefficient ($m^2$/s) of the fluid.

Furthermore, according to Patent Document 2, if the riblets have a triangular cross section, the distance s between the edges of the riblets satisfies the following expression (2):

$$h/s = 0.75 \text{ to } 1.25 \qquad \ldots (2)$$

However, the riblets described above can reduce the fluid friction of a flow in a prescribed Reynolds number range but the riblets are unable to reduce the fluid friction of a flow outside the prescribed Reynolds number range and increases the fluid friction on the contrary. This will be described in detail.

The friction velocity Ur is generally represented by the following expression (3).

$$U_r = \sqrt{\frac{\tau_w}{\rho}} \qquad \ldots (3)$$

where $\rho$ is the density of the fluid (kg/$m^3$), and $\tau_w$ is the wall shearing stress (N/$m^2$) which is represented by the following expression (4):

$$\tau_w = \frac{D\Delta P}{4L} = \frac{\lambda \rho U_m^2}{8} \qquad \ldots (4)$$

where D is the inner diameter of the pipe (m), $\Delta P/L$ is pressure loss per unit pipe length (Pa/m), $\lambda$ is a pipe friction coefficient (dimensionless), and Um is the average flow rate in the pipe (m/s).

From expressions (1), (3), and (4), the height h of the riblets is represented by the following expression (5):

$$h = \frac{h^+ \nu}{U_m} \sqrt{\frac{8}{\lambda}} = \frac{h^+}{\text{Re}} \sqrt{\frac{8}{\lambda}} D \qquad \ldots (5)$$

where Re is a Reynolds number (dimensionless) that is represented by the following expression (6):

$$\text{Re} = \text{U}_m\text{D}/\nu \qquad \ldots (6)$$

From expressions (2) and (5), the distance s is represented by the following expression (7):

$$s = (0.8 \sim 1.333) \frac{h^+}{\text{Re}} \sqrt{\frac{8}{\lambda}} D \qquad \ldots (7)$$

From expressions (5) and (7), the height h and the distance s of the riblets in Patent Document 2 depend on the Reynolds number Re, the pipe friction coefficient $\lambda$ and the pipe diameter D. The pipe friction coefficient $\lambda$ is generally a function of the Reynolds number Re, and therefore the height h and the distance s of the riblets depend on the Reynolds number Re and the pipe diameter D.

Therefore, the riblets disclosed by Patent Document 2 can reduce the fluid friction in the range of the Reynolds numbers estimated in design (referred to as "estimated Reynolds numbers"), but once outside the range of the estimated Reynolds numbers, the fluid friction cannot be reduced and even can be increased on the contrary. In an oil well, a gas well, and a steam well, the discharge characteristics of the well and the components of the fluid change with time, and therefore the Reynolds number Re in the well changes with time. Therefore, in a metal pipe having riblets designed within the range of Reynolds numbers based on the original discharge characteristics and the original components of the discharged fluid, the riblets could not be effective as the Reynolds number depart from the estimated Reynolds number range with time.

In short, the pipe disclosed by Patent Document 2 reduces the fluid friction only in a flow in the estimated Reynolds number range but once the flow depart from the estimated Reynolds number range, the friction cannot be reduced and even can be increased on the contrary.

In the pipe disclosed by Patent Document 2, the riblets are formed on a sheet different from the pipe, and the sheet is adhered to the inner circumferential surface of the pipe. It would be difficult to make the sheet adhere to the inner circumferential surface of the pipe with high precision, and therefore the pipe disclosed by Patent Document 2 could not be produced easily. The sheet is a flexible organic material or metal foil and should therefore be disadvantageous in terms of durability.

The following two documents are related non-patent documents.

Non-patent Document 1: Sirovich, L. and Karlsson, S., "Turbulent drag reduction by passive mechanisms," Nature, Vol. 388(1997), 753.

Non-patent Document 2: Walsh, M. J. and Weinstein, L. M., "Drag and Heat Transfer with Small Longitudinal Fins," AIAA Paper, 78-1161(1978).

DISCLOSURE OF THE INVENTION

It is an object of the invention to provide a metal pipe that allows fluid friction to be reduced in a wide Reynolds number range.

The inventors have examined and considered a mechanism of reducing fluid friction by riblets and made the following findings.

Turbulent friction of the fluid results from the structure of vortices in the vicinity of a solid wall. More specifically, the passage of the fluid through a pipe creates a streak structure near the inner circumferential surface of the pipe in which high speed and low speed streaks extending axially in the pipe are alternately arranged in the circumferential direction. A hairpin vortex is generated at a part of the low speed steak in the streak structure, and the head of the hairpin vortex is lifted more on the downstream side and departs from the inner circumferential surface of the pipe. The low speed streak is separated from the inner circumferential surface of the pipe accordingly, violently disturbed, and broken down together with the hairpin vortex, so that the streak structure is wound in the circumferential and radial directions. The breaking down of the vortex structure and the winding of the streak cause energy losses, and the turbulent friction of the fluid is generated.

If a plurality of ridges such as riblets are formed at the inner circumferential surface of the pipe and the shape and size of the ridges match the streak structure and the scale of a hairpin vortex, the generation and breakdown of the hairpin vortex and the winding of streaks are restrained by the ridges, so that the energy loss is reduced and the turbulent friction of the fluid is reduced.

The distance between adjacent low speed streaks (hereinafter referred to as "inter-streak distance") $W^+$ (which is dimensionless based on the friction velocity and the kinematic viscosity coefficient) and the diameter $d^+$ of the hairpin vortex (which is dimensionless based on the friction velocity and the kinematic viscosity coefficient) generally vary depending on the Reynolds number. More specifically, the inter-streak distance $W^+$ is smaller and the diameter $d^+$ of the hairpin vortex is smaller for larger Reynolds numbers.

As described above, a plurality of riblets identical in height and interval can restrain only the generation and breaking down of hairpin vortex and the winding of streaks that match the riblets. Therefore, the riblets are unable to reduce the fluid friction of a flow outside the prescribed Reynolds number range and even increases the fluid friction on the contrary because the streak structure and the scale of the hairpin vortex do not match the size of the riblets.

The inventors have therefore come to think that the circumferential arrangement of a plurality of ridges having a plurality of different heights may reduce fluid friction in a wide Reynolds number range. In a surface with such a plurality of ridges having a plurality of different heights that extend in the direction of the flow of the fluid, if changes in the flow changes the Reynolds number accordingly, and the streak structure and the scale of a hairpin vortex change, the streak and the hairpin vortex can each match any one of the ridges. Therefore, the ridges having the plurality of different heights can reduce the fluid friction in a wide Reynolds number range.

As a result of examinations (that will be described as Examples 1 to 3) in consideration of the above, the inventors have found that in a metal pipe including a plurality of axially extending ridges arranged in the circumferential direction and having a plurality of different heights can reduce the fluid friction in a wide Reynolds number range.

Based on the above-described findings, the inventors completed the following invention.

A metal pipe according to the invention includes a plurality of ridges having a plurality of different heights, extending in the axial direction, and arranged in the circumferential direction at its inner circumferential surface.

The plurality of ridges arranged at the inner circumferential surface of the metal pipe according to the invention have a plurality of different heights. Therefore, if the streak structure and the scale of a hairpin vortex change depending on changes in the Reynolds number, the streaks and the hairpin vortex each match any one of the ridges. Therefore, the plurality of ridges having the plurality of different heights can reduce the fluid friction for a plurality of different Reynolds numbers.

The arithmetic mean roughness of the inner circumferential surface including the plurality of ridges in the transverse direction is preferably in the range from 1 $\mu$m to 100 $\mu$m. The arithmetic mean roughness (Ra) is obtained based on JIS B0601. If the arithmetic mean roughness is in the range from 1 $\mu$m to 100 $\mu$m, the fluid friction can effectively be reduced in a wide Reynolds number range, particularly at Reynolds number of $10^4$ or more. The heights and intervals of the plurality of ridges in a cross section are preferably irregular. The axial length of the ridges is preferably 0.03 times or more the inner diameter of the metal pipe. In this way, the ridges have at least necessary length for a hairpin vortex responsible for the fluid friction to be generated and broken down, so that the generation and breaking down of hairpin vortices can be reduced and the fluid friction can be reduced.

A method of manufacturing a metal pipe according to the invention includes the steps of inserting one end of a hollow shell into dice, inserting, into the hollow shell, a plug including a cylindrical portion having a plurality of ridges having a plurality of different heights, extending in the axial direction, and arranged in the circumferential direction at its surface, and drawing the hollow shell while the dice and the plug are fixed.

By the method of manufacturing a metal pipe according to the invention, drawing is carried out using the plug having the plurality of ridges on the surface, so that a plurality of ridges having a plurality of different heights can readily be formed at the inner circumferential surface of the metal pipe. Therefore, a metal pipe including the plurality of ridges having the plurality of different heights at the inner circumferential surface can readily be produced. The metal pipe itself is provided with the ridges rather than forming ridges at a material such as a sheet different from the metal pipe. Therefore, the durability of the ridges can be maintained in a high level.

The arithmetic mean roughness of the surface of the cylindrical portion in the transverse direction is preferably in the range from 1 μm to 100 μm. In this case, the arithmetic mean roughness of the inner circumferential surface of the produced metal pipe can be in the range from 1 μm to 100 μm. Therefore, the produced metal pipe allows the fluid friction to be effectively reduced in a wide Reynolds number range, particularly at Reynolds numbers of $10^4$ or more.

A method of manufacturing a metal pipe according to the invention includes the steps of grinding a main surface of a metal plate in the lengthwise direction, thereby forming a plurality of ridges having a plurality of different heights and extending in the lengthwise direction at the main surface, and welding both ends of the metal plate in the lengthwise direction so that the main surface of the metal plate forms an inner circumferential surface.

By the method of manufacturing a metal pipe according to the invention, a main surface of a metal plate is ground so that a plurality of ridges having a plurality of different heights can easily be formed at the main surface of the metal plate. Therefore, a metal pipe provided with a plurality of ridges having a plurality of different heights at its inner circumferential surface can readily be produced. The welded pipe itself is provided with the ridges rather than forming ridges at a material (such as a sheet) different from the welded pipe. Therefore, the durability of the ridges can be maintained in a high level. In this case, in the step of forming the plurality of ridges at the main surface, the arithmetic mean roughness of the main surface in the transverse direction is preferably in the range from 1 μm to 100 μm. In this way, the arithmetic mean roughness at the inner circumferential surface of the produced welded pipe in the transverse direction can be in the range from 1 μm to 100 μm. Therefore, the produced welded pipe allows the fluid friction to be effectively reduced in a wide Reynolds number range, particularly at Reynolds numbers of $10^4$ or more.

BRIEF DESCRIPTION OF THE DRAWINGS

Fig. 1 is a perspective view of a metal pipe according to an embodiment of the invention;
Fig. 2 is a perspective view of a part of the inner circumferential surface of the metal pipe shown in Fig. 1;
Fig. 3 shows the size and shape of the inner circumferential surface of the metal pipe in the transverse direction shown in Fig. 1;
Fig. 4 shows a size and a shape different from the shape shown in Fig. 3;
Fig. 5 is a view showing a first step in a method of manufacturing a metal pipe by cold drawing;
Fig. 6 is a view showing a second step in the method of manufacturing the metal pipe by the cold drawing;
Fig. 7 is a perspective view of a plug for use in the cold drawing;
Fig. 8 is a view showing a third step in the method of manufacturing the metal pipe by the cold drawing;
Fig. 9 is a view showing a fourth step in the method of manufacturing the metal pipe by the cold drawing;
Fig. 10 is a view showing a first step in a method of manufacturing a welded pipe;
Fig. 11 is a view showing a second step in the method of manufacturing the welded pipe;
Fig. 12 is a view showing the structure of a test device used in Examples 1 and 2;
Fig. 13 is a cross sectional view of a test duct in the test device in Fig. 12;
Fig. 14 shows the relation between the pipe friction coefficients of inventive materials and the Reynolds number;
Fig. 15 shows the relation between the friction reduction ratios of inventive materials and the Reynolds number;
Fig. 16 shows the relation between the pipe friction coefficients of metal plates including riblets and the Reynolds number;
Fig. 17 shows the relation between the pipe friction reduction ratios and the arithmetic mean roughness of the inventive materials; and
Fig. 18 shows the relation between the wellhead pressure and the production in the inventive material and the comparative material.

BEST MODE FOR CARRYING OUT THE INVENTION

Now, an embodiment of the invention will be described in detail in conjunction with the accompanying drawings, in which the same or corresponding portions are denoted by the same reference characters, and their description will not be repeated.

1. Shape of Metal Pipe

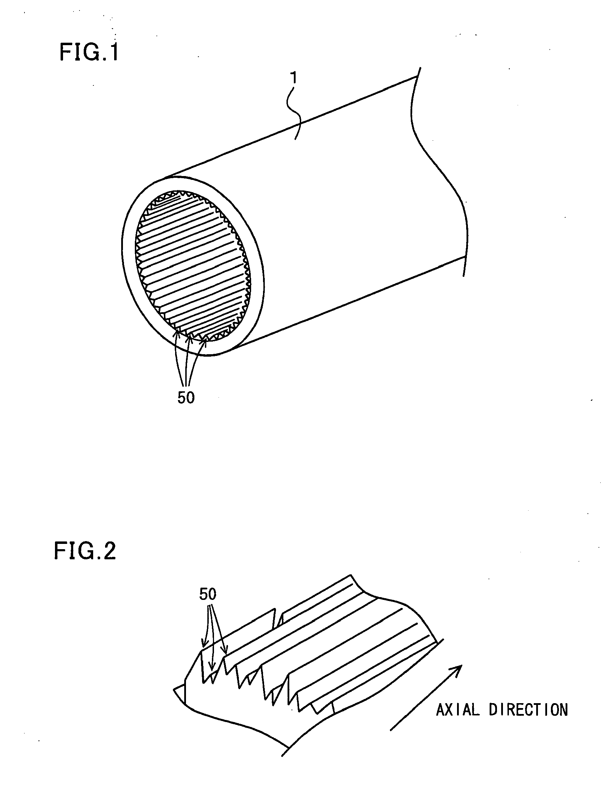

Fig. 1 shows a metal pipe according to the embodiment of the invention. The metal pipe 1 includes a plurality of ridges 50 at its inner circumferential surface. Fig. 2 is a partly expanded view of the inner circumferential surface of the metal pipe 1. The ridges 50 in Fig. 2 have a plurality of difference heights, extend in the axial direction, and are arranged in the circumferential direction. Note the circumferential intervals between the plurality of ridges do not have to be equal. More specifically, the plurality of ridges 50 have a plurality of different circumferential intervals.

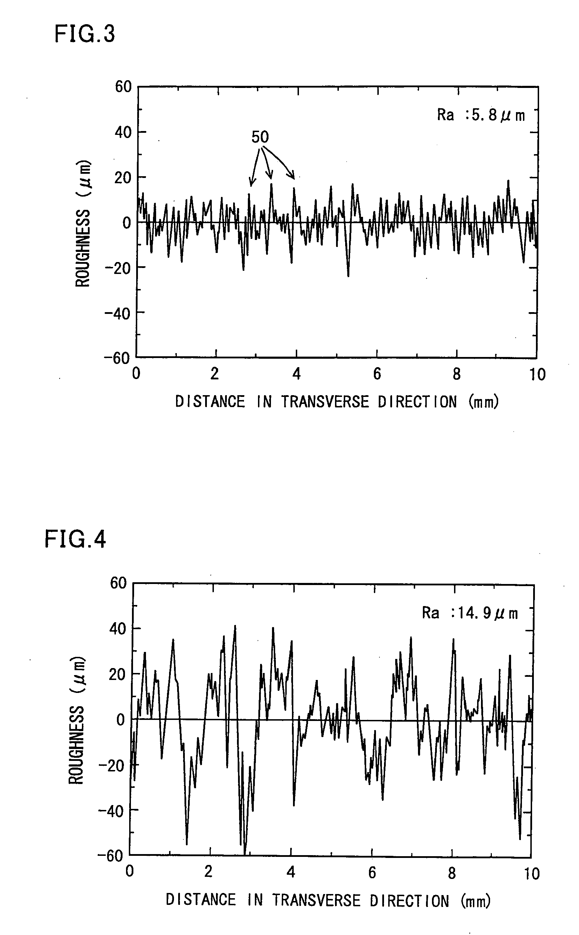

Fig. 3 shows an example of measurement of the sectional shape of the plurality of ridges 50 in the transverse direction of the inner circumferential surface of the metal pipe 1 using a surface roughness measuring machine. In Fig. 3, the ordinate represents the heights of the ridges 50 and the abscissa represents the intervals in the transverse direction. As can be seen from Fig. 3, the heights of the plurality of ridges 50 and the distances between adjacent ridges (intervals) are irregular, and the shapes of the ridges 50 are also irregular.

In this way, if such a plurality of ridges having a plurality of different heights are formed at the inner circumferential surface of the metal pipe, the streak structure or the scale of the hairpin vortex matches any one of the ridges if they change depending on changes in the Reynolds number. Therefore, the winding of the streak structure and the generation and breaking down of hairpin vortices can be reduced, which reduces the fluid friction. Consequently, the fluid friction can be reduced in a wide Reynolds number range.

The arithmetic mean roughness (Ra) of the inner circumferential surface including the plurality of ridges in the transverse direction is preferably in the range from 1 $\mu$m to 100 $\mu$m. If the arithmetic mean roughness is in the range, the different heights of the plurality of ridges at the inner circumferential surface match the streak structure and the scale of a hairpin vortex generated by a flow at Reynolds numbers Re of $10^4$ or more. Therefore, in a flow at a Reynolds number Re of $10^4$ or more, the fluid friction can effectively be reduced. The friction can be reduced more effectively if the Reynolds number Re is from $10^4$ to $10^7$, even more effectively if the Reynolds number Re is from $10^4$ to $10^6$.

If the arithmetic mean roughness is from 1 $\mu$m to 100 $\mu$m, the shapes of the ridges are not particularly limited. For example, the plurality of ridges in the transverse direction of the inner circumferential surface of the metal pipe 1 may have shapes as shown in Fig. 4. The arithmetic mean roughness is preferably from 6 $\mu$m to 70 $\mu$m in order to effectively reduce the fluid friction in the range of Reynolds numbers in the order of $10^5$ to $10^6$ that is frequently used.

The axial length of each of the ridges 50 (hereinafter referred to as "ridge length") is preferably 0.03 times or more the inner diameter of the metal pipe 1. The ridge length will be described in detail.

As described above, the winding of a streak structure and the process from the generation to breaking down of a hairpin vortex are repeated at prescribed intervals (hereinafter referred to as "cycle distance"). Therefore, if the ridge length is equal to or larger than the cycle distance, the winding of one streak structure or one lifetime of a hairpin vortex (from its generation to breaking down) is reduced, so that the energy loss can be reduced and therefore the fluid friction can be reduced.

It is generally considered that the dimensionless cycle distance X+ is 1000. The ridge length X is represented by the following expression (8):

$$X = \frac{X^+ v}{U_m} \sqrt{\frac{8}{\lambda}} = \frac{X^+}{\text{Re}} \sqrt{\frac{8}{\lambda}} D \qquad \dots (8)$$

where D is the inner diameter (m) of the metal pipe 1. The pipe friction coefficient $\lambda$ is defined by the Blasius formula shown in expression (9) for the ease of representation.

$$\lambda = \frac{0.3164}{\text{Re}^{0.25}} \qquad \dots (9)$$

From expressions (8) and (9), X/D is represented by the following expression (10):

$$\frac{X}{D} = 5.028 X^+ \text{Re}^{-0.875} \qquad \dots (10)$$

The winding of a streak structure and the process from the generation to breaking down of a hairpin vortex are repeated, and the position of the winding and the position of the generation and breaking down cannot be specified. Assume that the repetition is continuously generated. In order to reduce 90% or more of the plurality of continuous cycles, the ridge length is preferably 10 times or more the cycle length X.

Therefore, the preferable ridge length $X_{10}$ is represented by the following expression (11):

$$ X_{10} = 10 \times 5.028 X^+ \, \mathrm{Re}^{-0.875} \times D \qquad \ldots (11) $$

When the metal pipe is used as an oil country tubular good or line pipe, the Reynolds number Re for a flow for use is generally about in the range from $10^4$ to $10^7$, and therefore the preferable ridge length $X_{10}$ at each Reynolds number is given as follows in Table 1 based on expression (11).

Table 1

| Reynolds number Re | ridge length |
|---|---|
| $10^4$ | 16D or more |
| $10^5$ | 2D or more |
| $10^6$ | 0.3D or more |
| $10^7$ | 0.03D or more |

As can be understood from the above, the ridge length $X_{10}$ is preferably 0.03 times or more the inner diameter D of the metal pipe. This is particularly effective for Reynolds numbers Re of $10^7$ or more. The ridge length $X_{10}$ is more preferably 0.3 times or more the inner diameter D, which is particularly effective for Reynolds numbers Re of $10^6$ or more. The ridge length $X_{10}$ is even more preferably twice or more the inner diameter D, which is particularly effective for Reynolds numbers Re of $10^5$ or more. The most preferable ridge length $X_{10}$ is 16 times or more the inner diameter D. This is particularly effective for a wide range of Reynolds numbers Re of $10^4$ or more.

Note that if the length of the ridges formed at the metal pipe 1 is shorter than the ridge length $X_{10}$ described above, the reduction effect on the fluid friction to some extent can be provided.

In Figs. 1 to 4, the plurality of ridges 50 having different heights are irregularly arranged, but such a plurality of ridges having different heights may be arranged in a regular manner. The ridges 50 do not have to have different heights among one another and some of them may have the same heights. In short, if the metal pipe includes a plurality of ridges having a plurality of different lengths at the inner circumferential surface, the advantages of the invention can be provided. The heights of the ridges may change in the axial direction.

The ridges 50 extend in the axial direction, but they do not have to extend in parallel to the axial direction. The ridges 50 may extend helically with respect to the axial direction. If the ridges 50 are inclined at 30˚ or less in the lengthwise direction with respect to the axial direction, the advantages of the invention can effectively be provided.

These plurality of ridges 50 having different heights do not have to be formed on the entire inner circumferential surface of the metal pipe 1. If for example the metal pipe 1 is formed by welding as will be described, the ridges 50 are not formed at the part of the inner circumferential surface corresponding to the seam portion, but the advantages of the invention can still be provided in the metal pipe 1 (welded pipe). In short, if a plurality of ridges 50 having different heights are formed at a part of the inner circumferential surface of the metal pipe 1, the advantages of the invention to some extent can be provided.

The chemical composition of the metal pipe 1 is not particularly limited and may be carbon steel or low alloy steel. If corrosive or erosive fluid is made to flow through the metal pipe 1, the material of the metal pipe 1 is preferably high allow steel or heat treated steel having high corrosion and erosion resistance. In this way, the ridges 50 can be prevented from being removed by corrosion or the like.

2. Manufacturing Method

The metal pipe 1 described above may be produced by carrying out cold-drawing to a hollow shell using a plug having a plurality of ridges or by grinding a main surface of a metal plate to form a plurality of ridges thereon and forming the metal plate into a welded pipe. Now, the methods will be described in detail.

Cold-drawing Method

To start with, a hollow shell (metal pipe) to be subjected to cold drawing is prepared. The hollow shell is produced for example by hot working. The hollow shell may be produced by piercing and rolling or hot forging. The hollow shell may be a seamless pipe or a welded pipe.

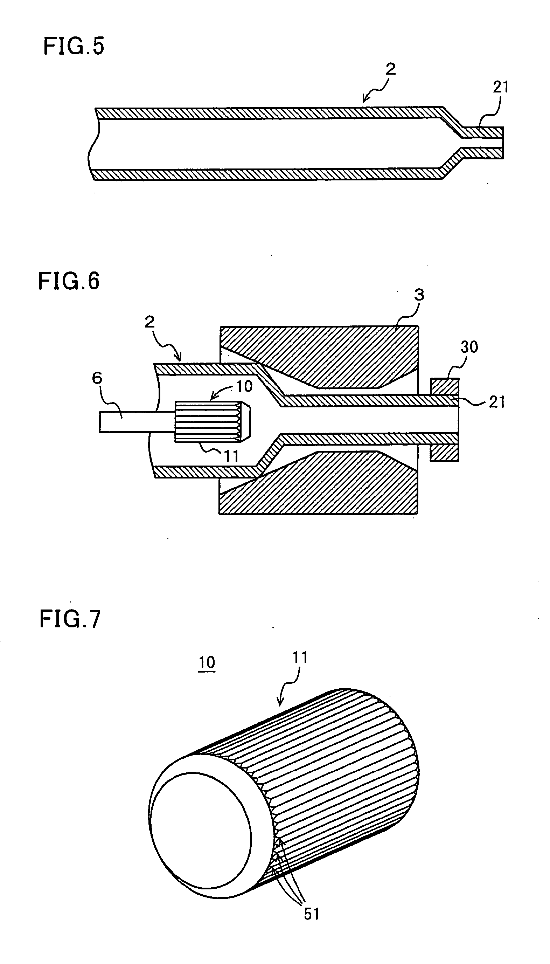

The prepared hollow shell is subjected to cold drawing. First, scales sticking to the outer and inner circumferential surfaces of the hollow shell are removed by pickling. After the removal of the scales, the tip end 21 of the hollow shell 2 is subjected to nosing as shown in Fig. 5. Then, as shown in Fig. 6, the tip end 21 of the hollow shell 2 is inserted to dice 3 fixed to a draw bench (not shown). After the insertion, the tip end 21 let out from the outlet side of the dice 3 is held by the chuck 30 of the draw bench and fixed.

Then, the plug 10 is fixed to the tip end of a pole 6 and inserted into the hollow shell 2 in the drawing direction.

As shown in Fig. 7, the cylindrical part 11 of the plug 10 includes a plurality of ridges 51 having different heights that extend in the axial direction and are arranged in the circumferential direction at its surface. The surface shape of the cylindrical part 11 in the transverse direction is the same as those in Figs. 3 and 4, and the heights and distances (intervals between adjacent ridges 51) of the plurality of ridges 51 are irregular. The arithmetic mean roughness of the surface of the cylindrical part including the ridges 51 in the transverse direction is preferably from 1 $\mu$m to 100 $\mu$m.

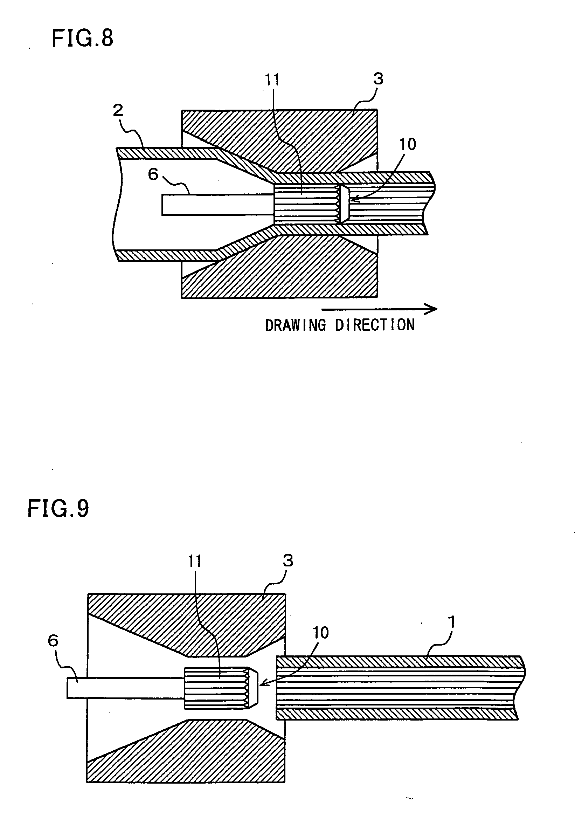

Then, the hollow shell 2 fixed by the chuck 30 is drawn through the dice 3. More specifically, as shown in Figs. 8 and 9, the hollow shell 2 is drawn while the dice 3 and the plug 10 are fixed. During the drawing, the inner circumferential surface of the hollow shell 2 is in contact with the surface of the cylindrical part 11, and the ridges 51 at the surface of the cylindrical part 11 are transferred and the plurality of ridges 50 having a plurality of different heights are formed at the inner circumferential surface of the hollow shell 2 in the axial direction. By these steps, the metal pipe 1 is produced.

The metal pipe 1 can readily be produced by drawing the hollow shell 2 using the plug 10 having the plurality of ridges 51 on the surface, and therefore the manufacturing process is not complicated. The metal pipe 1 itself is provided with the ridges 50 rather than forming ridges 50 at a material different from the metal pipe 1 such as a sheet, so that the durability of the ridges 50 can be increased.

Note that the plug 10 has a cylindrical shape according to the embodiment, but the plug may have a tapered shape.

Grinding Method

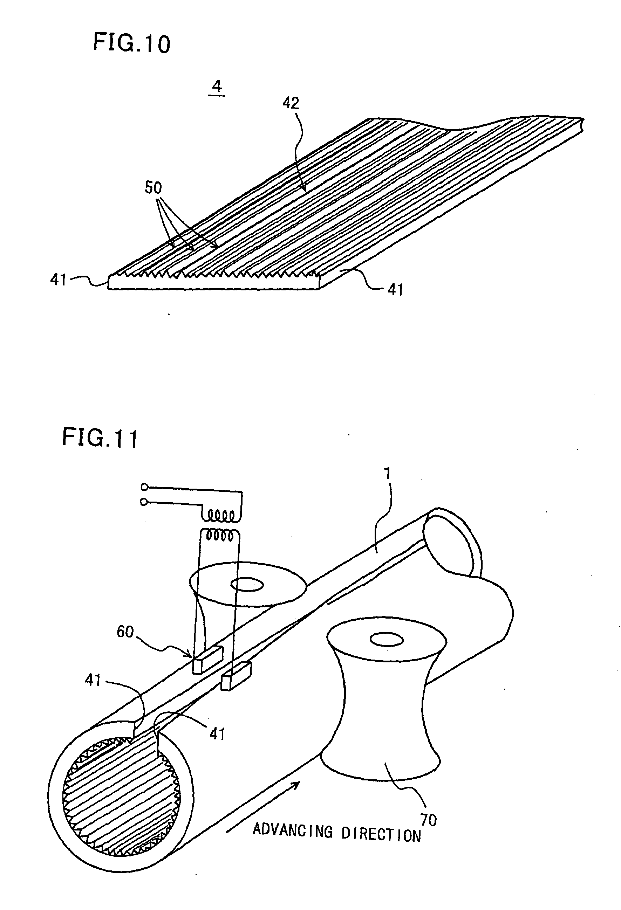

To start with, a metal plate processed by hot or cold working is prepared. As shown in Fig. 10, the prepared metal plate 4 has its main surface 42 ground with a belt sander or the like in the lengthwise direction, and a plurality of ridges 50 having a plurality of different heights that extend in the lengthwise directions are formed at the main surface 42. At the time, the abrasive grain number of the belt sander varies depending on the materials of the metal plate and the abrasive grains or the like, but abrasive grains of No. 2000 to No. 8 may be used to allow the main surface in the transverse direction to have an arithmetic mean roughness from 1 $\mu$m to 100 $\mu$m. When the abrasive grain number is from No. 100 to No. 10, the arithmetic mean roughness can be from 6 $\mu$m to 70 $\mu$m. Examples of the material of the abrasive grains may include alumina, silicon carbide, zirconia, and garnet.

Then, a metal pipe 1 having the main surface 42 of the metal plate 4 as its inner circumferential surface is produced. More specifically, the metal plate 4 is bent by press forming or the like and made into a tubular shape (open pipe). At the time, the bending process is carried out so that the main surface of the metal plate forms the inner circumferential surface of the open pipe and the lengthwise direction of the metal plate 4 corresponds to the axial direction of the pipe. Then, as shown in Fig. 11, the joint parts of the open pipe, in other words, both end surfaces 41 of the metal plate 4 in the lengthwise direction are welded and the metal pipe 1 is produced.

In Fig. 11, the end surfaces 41 are welded according to an electric resistance welding method using a feed element 60 and a welding roll 70 but the welding may be carried out according to other methods. For example an induction coil may be used for welding or laser welding may be carried out.

As in the foregoing, the plurality of ridges 50 having a plurality of different heights may be produced at the main surface 42 of the metal plate 4 by grinding the main surface of the metal plate, and therefore the metal pipe 1 can readily be produced, so that the manufacturing process is not complicated. The metal pipe 1 itself is provided with the ridges 50 rather than forming ridges 50 at a material different from the metal pipe 1 such as a sheet, so that the durability of the ridges can be increased.

Note that in the above-described embodiment, the main surface 42 of the metal plate 4 is ground by a belt sander, but other kinds of grinding machines may be employed. For example, the grinder or sander may be used for grinding or cutting may be carried out using abite. Alternatively, the ridges may be transferred by rolling.

Example 1

A surface provided with a plurality of ridges identical in shape, height and interval (i.e., a plurality of riblets) and a surface provided with a plurality of ridges having a plurality of different heights were examined about how much fluid friction was reduced at the surfaces.

Two pieces of each of the metal plates having surface roughnesses in Table 2 were prepared.

Table 2

|  | test No. | ridge kind | height ($\mu$m) | interval ($\mu$m) | arithmetic mean roughness Ra ($\mu$m) | note |
|---|---|---|---|---|---|---|
| inventive material | 1 | irregular | - |  | 5.8 | - |
|  | 2 | irregular | - |  | 14.9 | - |
| comparative material | 3 | riblet | 293 | 598 | - | - |
|  | 4 | riblet | 82 | 157 | - | - |
|  | 5 | riblet | 37 | 75 | - | - |
|  | 6 | irregular | - |  | 5.8 | isotropic surface roughness |
|  | 7 | irregular | - |  | 14.9 | isotropic surface roughness |

Test No. 1 was a metal plate having a plurality of ridges having different heights that extended in the lengthwise direction on its main surface according to the invention, and the shape of the main surface in the transverse direction was as shown in Fig. 3. The arithmetic means roughness was 5.8 $\mu$m. Test No. 2 was a metal plate having a plurality of ridges having different heights that extended in the lengthwise direction on its main surface according to the invention, and the shape of the main surface in the transverse direction was as shown in Fig. 4. The arithmetic mean roughness was 14.9 $\mu$m. The arithmetic mean roughness (Ra) was calculated based on JIS B0601.

Test Nos. 3 to 5 were metal plates as comparative materials each having a plurality of triangular riblets that extended in the lengthwise direction on the surface, and the heights and the intervals of the ridges were as shown in Table 2.

Test Nos. 6 and 7 were also metal plates as comparative materials each having isotropic roughness identical to the inner surface of a typical oil country tubular good or line pipe at the main surface. The arithmetic mean roughness of Test No. 6 in the lengthwise and widthwise directions of the main surface was 5.8 $\mu$m that was equal to that of test No. 1, and the arithmetic mean roughness of test No. 7 in the lengthwise and widthwise directions of the main surface was 14.9 $\mu$m that is equal to that of test No. 2.

The metal plates each had a length of 4000 mm, a width of 100 mm, and a thickness of 1 mm. The ridges in test Nos. 1 and 2 were formed by grinding the main surfaces of the metal plates in the lengthwise direction using a belt sander. The riblets in test Nos. 3 to 5 were formed by rolling the metal plates using a roll having recessed portions in the same shape as that of the riblets on the surface. Test Nos. 5 and 6 were formed by descaling oxide scales on the main surfaces of the metal plates as rolled using alumina shots.

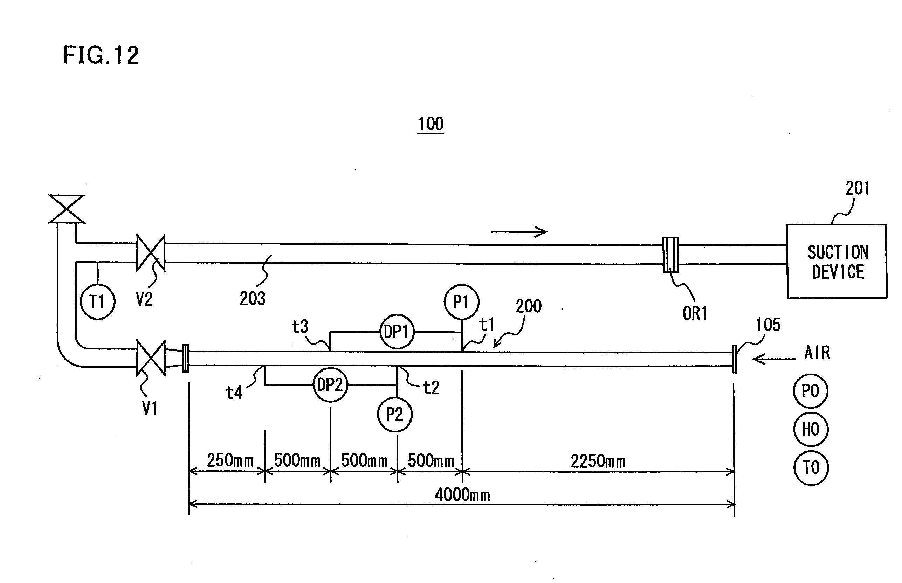

How much fluid friction was reduced in the test metal plates was examined using a test device 100 shown in Fig. 12.

The test device 100 included a test duct 200 as long as 4000 mm, a suction device 201, and a flow rate measuring duct 203. The test duct 200 was connected to the flow rate measuring duct 203 through a valve V2, and the flow rate measuring duct 203 was connected to the suction device 201 through an orifice meter OR1.

The suction device 201 included two suction blowers (not shown) connected in parallel, and the nominal suction pressure of each of the suction blowers was -54 kPa, the suction amount was 15 m³/min, and the capacity was 17 kW.

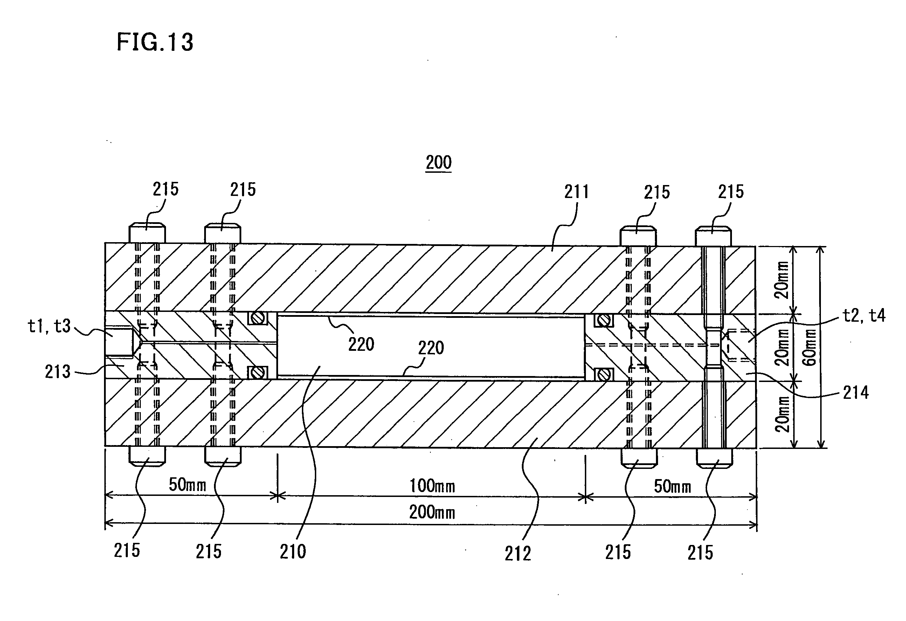

Fig. 13 is a cross sectional view of the test duct 200. The test duct 200 had a path 210 having a rectangular cross section inside by fixing an aluminum ground plate 212 and an aluminum top plate 211 by a plurality of bolts 215 through side wall materials 213 and 214. Note that O-rings were used to seal between the aluminum ground plate 212 and the aluminum top plate 211 and the side wall materials 213 and 214, so that ambient air was prevented from coming into the path 210. At the top and bottom of the path 210, two metal plates 220 of each test number in Table 2 were attached. More specifically, the two metal plates 220 were attached so that their main surfaces were opposed to each other and the ridges (or riblets) formed on the main surfaces were arranged along the direction of the fluid flow.

A section of the test duct 200 as long as 2250 mm from an air suction inlet 105 toward a valve V1 was set as a run-up section in order to attenuate the turbulence of the fluid (air) coming in from the air suction inlet 105 and carry out examinations with a steady state flow.

Tap holes t1 to t4 having a size of 1 mm used for measuring pressure were formed at intervals of 500 mm from the end of the run-up section to the valve V1. A differential pressure gauge DP1 was provided at the tap holes t1 and t3 and a differential pressure gauge DP2 was provided at the tap holes t2 and t4 to measure pressure losses. The pressure loss measuring sections by the differential pressure gauges DP1 and DP2 were each as long as 1000 mm. A pressure gauge P1 was provided at the tap hole t1 and a pressure gauge P2 was provided at the tap hole t2, so that the pressure in the path 210 was measured. The flow rate was measured by the orifice meter OR1 provided at the end of the flow rate measuring duct 203.

The test device 100 further included a pressure meter P0, a hygrometer H0, and thermometers T0 and T1. These measuring devices were used to measure the pressure, humidity, and temperature of the fluid (air) during the tests, and the physical property values (density and viscosity) of the fluid were corrected.

Note that prior to evaluation tests for the metal plates shown in Table 2, cold rolled stainless steel plates that could be regarded as being hydrodynamically smooth were attached to the top and bottom of the rectangular path 210 of the test duct 200 for preliminary examination in order to examine the validity of evaluation by the test device 100. Consequently, the pipe friction coefficients $\lambda$ and Reynolds numbers Re of the smooth stainless steel plates match a hydrodynamically smooth Moody diagram, and the device was determined as an appropriate evaluation device for the reduction effect of the fluid friction coefficient.

Metal plates of each test number were attached to the test duct 200 of the test device 100, pressure losses at the test duct 200 were measured while the suction flow rate (suction flow velocity Vm) was varied, and the pipe friction coefficient $\lambda$ and the Reynolds number Re were obtained from expressions (12) and (13).

$$\lambda = \frac{D_h}{L}\left[\frac{1}{\rho_1 V_{m1}^{\,2}}\frac{P_1^{\,2}-\left(P_1-\Delta P\right)^2}{P_1}-2\log\!\left(\frac{P_1}{\left(P_1-\Delta P\right)}\right)\right] \ \ \dots\,(12)$$

$$R_e = \frac{\rho V_m D_h}{\mu} \qquad\qquad \dots\,(13)$$

where $P_1$(Pa) is pressure measured by the pressure gauge P1 or P2 (upstream pressure) and $\Delta P$(Pa) is a pressure loss measured at the differential pressure gauge DP1 or DP2. L(m) is a pressure loss measuring section. $V_m$ (m/s) is the average flow velocity and $V_{m1}$ (m/s) is the average flow velocity at a location where $P_1$(Pa) is measured. $\rho$ (kg/m$^3$) is the density and $\mu$ (Pa·s) is the viscosity.

The water power average size is represented by $D_h$ (m) which is obtained from the following expression (14):

$$D_h = 2W \times H/(W+H) \qquad\qquad \dots\,(14)$$

where W(m) is the width of the rectangular duct 210 and H(m) is the height of the rectangular duct 210.

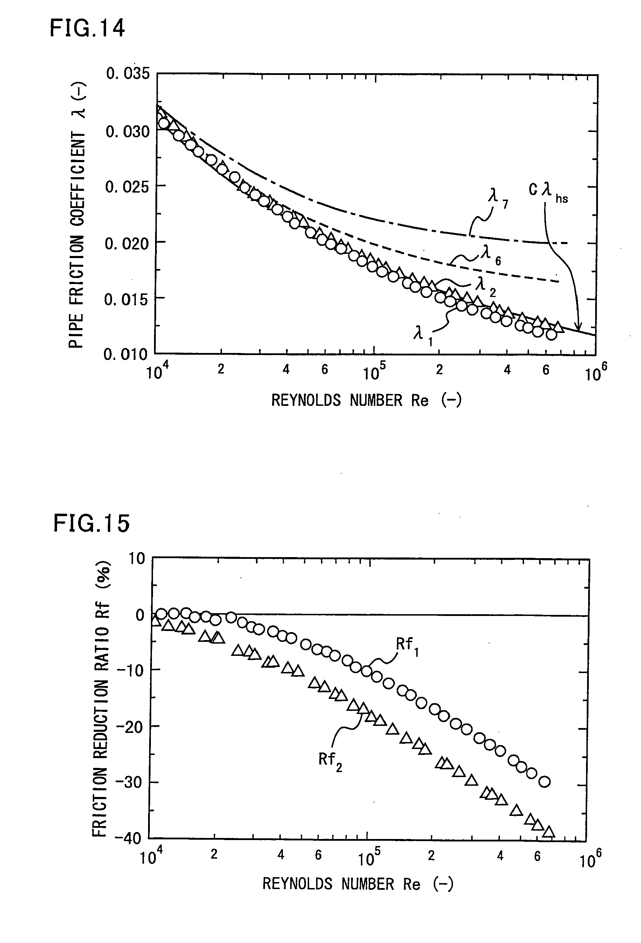

The result of tests is given in Figs. 14 to 16.

In Fig. 14, "○" is plotted for the pipe friction coefficient $\lambda_1$ of test No. 1, "Δ" is plotted for the pipe friction coefficient $\lambda_2$ of test No. 2. The pipe friction coefficients $\lambda_1$ and $\lambda_2$ were equal to or less than the pipe friction coefficient $\lambda_{hs}$ of a hydrodynamically smooth wall surface in a wide range of Reynolds numbers of $10^4$ or more. The pipe friction coefficient $\lambda_6$ of test No. 6 was higher than the pipe friction coefficient $\lambda_1$ of test No. 1 at any of the Reynolds numbers Re. The pipe friction coefficient $\lambda_7$ of test No. 7 was higher than the pipe friction coefficient $\lambda_2$ of test No. 2 at any of the Reynolds numbers Re.

Fig. 15 shows the relation between the friction reduction ratios Rf of test Nos. 1 and 2 and the Reynolds number Re. The friction reduction ratio Rf in this example is an indicator that shows how much fluid friction was reduced as compared to a comparative material having the same arithmetic mean roughness as that of inventive materials (test Nos. 1 and 2) and having isotropic surface roughness. The friction reduction ratio Rf (%) was produced by the following expression (15):

$$Rf = (\lambda_i \cdot \lambda_p)/\Lambda_p \times 100 \qquad \ldots (15)$$

where $\lambda_i$ is the pipe friction coefficient of an inventive material, and $\lambda_p$ is the pipe friction coefficient of a comparative material having the same arithmetic mean roughness (though it is isotropic roughness). The friction reduction ratio $Rf_1$ of test No. 1 was obtained by substituting the pipe friction coefficient $\lambda_1$ of test No. 1 for $\lambda_i$, and the pipe friction coefficient $\lambda_6$ of test No. 6 for $\lambda_p$. The friction reduction $Rf_2$ of test No. 2 was obtained by substituting the pipe friction coefficient $\lambda_2$ of test No. 2 for $\lambda_i$, and the pipe friction coefficient $\lambda_7$ of test No. 7 for $\lambda_p$.

As shown in Fig. 15, the friction reduction ratios $Rf_1$ and $Rf_2$ were smaller than 0% at Reynolds numbers Re of $10^4$ or more. More specifically, the metal plates of test Nos. 1 and 2 had less fluid friction than the metal plates having the same arithmetic mean roughness and isotropic surface roughness.

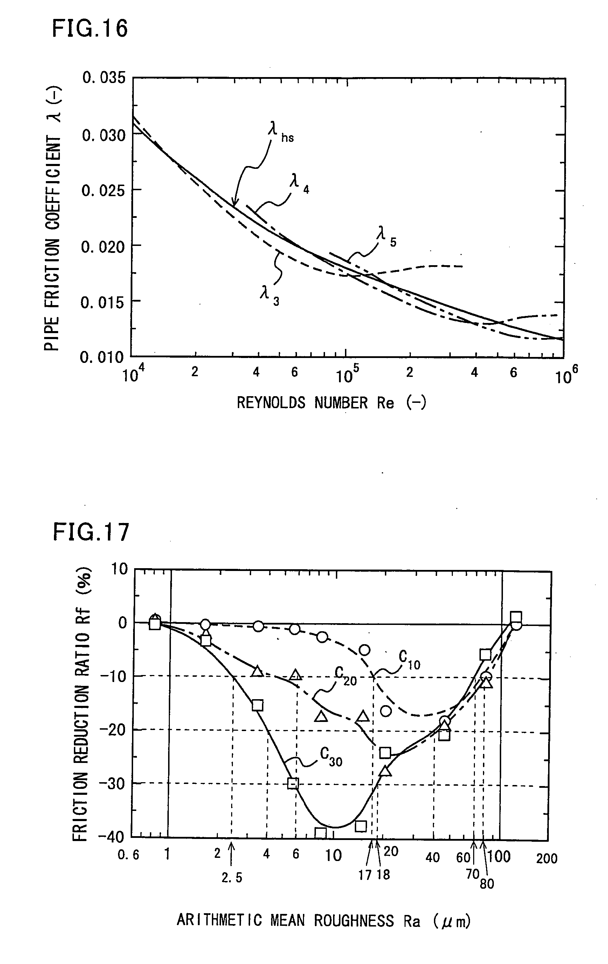

As shown in Fig. 16, the pipe friction coefficients $\lambda_3$ to $\lambda_5$ of the metals plates of test samples Nos. 3 to 5 were smaller than the pipe friction coefficient $\lambda_{hs}$ of a hydrodynamically smooth wall surface in a prescribed range of Reynolds numbers Re but larger than the pipe friction coefficient $\lambda_{hs}$ in a different range of Reynolds numbers Re from the above prescribed range. More specifically, the pipe friction coefficient $\lambda_3$ of test No. 3 was higher than the pipe friction coefficient $X_{hs}$ at Reynolds numbers Re of $1.2 \times 10^4$ or less and $1.2 \times 10^5$ or more. The pipe friction coefficient $\lambda_4$ of test No. 4 was higher than the pipe friction coefficient $X_{hs}$ at Reynolds numbers Re of less than $6 \times 10^4$ and more than $5 \times 10^5$. The pipe friction coefficient $\lambda_5$ of test No. 5 was higher than the pipe friction coefficient $X_{hs}$ at Reynolds numbers Re of $1.6 \times 10^5$ or less and $9 \times 10^5$ or more.

As described above, the metal plates of test Nos. 1 and 2 as the inventive materials had reduced fluid friction in the range of Reynolds numbers Re wider than the metal plates of test Nos. 3 to 5 having the riblets. The fluid friction was reduced as compared to the case of the metal plates (test Nos. 6 and 7) having the same arithmetic mean roughness and isotropic surface roughness.

Example 2

In metal plates having a plurality of ridges having a plurality of different heights and extending in the lengthwise direction at their main surfaces, the relation between the arithmetic means roughness of the surface in the transverse direction and the reduction in the fluid friction was examined.

Metal plates having the same sizes as Example 1 had their main surfaces ground with belt sanders in the lengthwise direction to produce a plurality of metal plates including a plurality of ridges having a plurality of different heights and extending in the lengthwise directions at their main surfaces. At the time, belt sanders of different abrasive grain numbers were used so that the plurality of metal plates had different arithmetic mean roughnesses at the main surfaces in the transverse direction. The plurality of thus produced metal plates each had an arithmetic mean roughness in the range from 0.8 $\mu$m to 120 $\mu$m. The arithmetic mean roughness (Ra) was calculated based on JIS B0601. Note that similarly to Example 1, two pieces of each of the metal plates having the same arithmetic mean roughness were prepared. Hereinafter, these metal plates will be referred to inventive materials.

Two pieces of each of metal plates having their main surfaces isotropically ground to have isotropic roughness on the surfaces and having the same arithmetic mean roughness as the inventive materials were prepared. Hereinafter, these metal plates will be referred to as comparative materials.

In short, comparative materials having the same arithmetic mean roughness as the inventive materials were prepared.

The produced inventive materials and comparative materials were subjected to the same tests as those in Example 1, and their pipe friction coefficients $\lambda$ were obtained. The friction reduction ratio Rf (%) was obtained from expression (15) based on the pipe friction coefficient $\lambda_p$ of a comparative material and the pipe friction coefficient $\lambda_i$ of an inventive material having the same arithmetic mean roughness.

The result of examination is shown in Fig. 17. The abscissa in Fig. 17 represents the arithmetic mean roughness of the inventive materials, and the ordinate represents the friction reduction ratio Rf. In the figure, the curve C10 connecting "$\bigcirc$" represents the friction reduction ratio Rf when the Reynolds number Re equals $2 \times 10^4$, the curve 20 connecting "$\Delta$" represents the friction reduction ratio Rf when the Reynolds number Re equals $1 \times 10^5$, and the curve C30 connecting "$\square$" represents the friction reduction ratio Rf when the Reynolds number Re equals $6 \times 10^5$.

As shown in Fig. 17, when the arithmetic mean roughness of each of the inventive materials was from 1 $\mu$m to 100 $\mu$m, the friction reduction ratio Rf was smaller than 0%, and the fluid friction was reduced. When the arithmetic mean roughness of each of the inventive materials was from 6 $\mu$m to 70 $\mu$m, the fluid friction reduction ratio Rf was not more than -10% in a frequently used Reynolds number range in the order of $10^5$ to $10^6$.

As can be seen, when the Reynolds number Re was in the order of $10^5$ (curve C30), the curve of the friction reduction ratio Rf was a downwardly raised curve with the point that equaled an average roughness Ra of about 10 $\mu$m

as an apex. The friction reduction ratio Rf was not more than -10% when the average roughness Ra of the inventive materials was in the range from 2.5 $\mu$m to 70 $\mu$m, not more than -20% when the average roughness Ra was in the range from 4 $\mu$m to 40 $\mu$m, and not more than -30% when the average roughness Ra was in the range from 6 $\mu$m to 18 $\mu$m.

When the Reynolds number Re was in the order of $10^4$ (curve C10), the curve of the friction reduction ratio Rf was a downwardly raised curve with the point for an average roughness Ra in the range from 20 $\mu$m to 40 $\mu$m as the apex, and when the average roughness Ra of the inventive materials was in the range from 17 $\mu$m to 80 $\mu$m, the friction reduction ratio Rf was not more than -10%.

Example 3

Assuming that a conventional 13Cr steel pipe and a metal pipe according to the invention including a plurality of ridges having a plurality of different heights and extending in the axial direction at the inner circumferential surface were each applied to a natural gas well, the production of the fluid (natural gas) and wellhead pressure were obtained by simulation.

Simulation Conditions

The condition of the gas well was as shown in Table 3. The gas included the components shown in Table 4.

Table 3

| item | condition |
|---|---|
| depth | 3000 m (vertical well) |
| well bottom pressure | 5310 psig (36.3 MPaG) |
| well bottom temperature | 230˚ F (110˚C) |

Table 4

| composition | mol. % |
|---|---|
| $CH_4$ | 80.37 |
| $C_2H_6$ | 5.19 |
| $C_3H_8$ | 2.12 |
| $C_4H_{10}$ | 0.77 |
| $(CH_3)_3CH$ | 0.45 |
| $C_5H_{12}$ | 0.31 |
| $(CH_3)_2CHCH_2CH_3$ | 0.31 |
| $C(CH_3)_4$ | 0.03 |
| $C_6H_{14}$ | 0.35 |
| $C_7H_{16}$ | 0.37 |
| $C_8H_{18}$ | 0.4 |
| $C_9H_{20}$ | 0.33 |
| $C_{10}H_{22}$ | 0.27 |
| $C_6H_6$ | 0.02 |
| $C_6H_{12}$ | 0.04 |
| $C_6HnCH_3$ | 0.1 |
| $N_2$ | 3.32 |
| $CO_2$ | 1.96 |

(continued)

| composition | mol. % |
|---|---|
| $H_2S$ | 0.66 |
| $H_2O$ | 1.73 |
| others | 0.9 |

There were two kinds of metal pipes as shown in Table 5 to be used in the gas well.

Table 5

| simulation No. | kind | arithmetic mean roughness ($\mu$m) | note |
|---|---|---|---|
| 1 | inventive | 5 | - |
| 2 | comparative | 5 | equivalent to 13Cr steel pipe heat-treated after making |

Simulation No. 1 was a metal pipe according to the invention including a plurality of ridges having a plurality of different heights and extending in the axial direction at its inner circumferential surface. The ridges were arranged in the circumferential direction, and the average roughness of the inner circumferential surface in the transverse direction was 5 $\mu$m. Simulation No. 2 was a 13Cr steel pipe as a comparative material typically used in a gas well, and the metal pipe corresponded to a pipe subjected to heat treatment after making. More specifically, the metal pipe had an inner circumferential surface with isotropic surface roughness, and the average roughness was 5 $\mu$m. Note that the metal pipes of Simulation Nos. 1 and 2 were both 7 inches in size, in other words, their outer diameter was 177.8 mm, and their thickness was 10.36 mm.

Simulation Method

Assuming that the fluid flow in the gas well was a one-dimensional compressible isothermal flow, the wellhead pressure relative to the gas production was obtained by solving the following continuity equation (16), momentum equation (17) and state equation (18). Note that the state equation (18) was the Soave-Redlich-Kwong formula having intermolecular force corrected with respect to actual air. Note that details of the Soave-Redlich-Kwong formula are disclosed by Soave, G., Chem. Eng. Sci., 27 (1972), 1197.

$$\frac{\partial \rho_g}{\partial t} + \frac{\partial \rho_g u_g}{\partial z} = 0 \qquad \ldots (16)$$

$$\frac{\partial \rho_g u_g}{\partial t} + \frac{\partial \rho_g u_g^2}{\partial z} = \frac{\partial p}{\partial z} - \rho_g g - \frac{4\tau_w}{D} \qquad \ldots (17)$$

$$P = \frac{RT}{V_g - b} - \frac{\alpha(T)}{V_g(V_g + b)} \qquad \ldots (18)$$

where D is the inner diameter (m) of the metal pipe, g is gravity acceleration (m/s$^2$), P is pressure (Pa), R is a gas constant (Pa·m$^3$/kg/K), T is temperature (K), t is time (s), Ug is the flow velocity (m/s), z is the axial distance (m), and pg is the density (kg/m$^3$).

In addition, Vg (m$^3$/kg) is a specific volume represented by the following expression (19):

$$V_g = 1/\rho_g \qquad \ldots (19)$$

Furthermore, $\tau_w$ is a wall friction stress (N/m³) represented by the following expression (20):

$$\tau_w = \frac{\lambda}{8} \rho_g u_g^{\ 2} \qquad \ldots (20)$$

where $\lambda$ is a pipe friction coefficient. The following expression (21) was used for the pipe friction coefficient of simulation No. 2. Meanwhile, for simulation No. 1, an empirical formula including the pipe friction coefficient $\lambda$ and the Reynolds number Re obtained by same tests as those in Example 1 were used.

$$\frac{1}{\sqrt{\lambda}} = -2\log\left(\frac{\varepsilon_e}{3.7} + \frac{2.51}{Re\sqrt{\lambda}}\right) \qquad \ldots (21)$$

In the formula, $\varepsilon_e$ is equivalent relative roughness represented by the following expression (22):

$$\varepsilon_e = \frac{k_e}{D} \qquad \ldots (22)$$

where $k_e$ is hydrodynamic roughness (m), and ke is a function of arithmetic mean roughness that can be experimentally determined.

Re is the Reynolds number represented by the following expression (23):

$$Re = \frac{\rho_g u_g D}{\mu_g} \qquad \ldots (23)$$

where $\mu g$ is the viscosity (Pa·s).

a(T) is a function of temperature represented by the following expression (24):

$$\alpha(T) = 0.42748 \frac{R^2 T_c^{\ 2}}{P_c}\left[1 + \left(0.480 + 1.57\omega - 0.176\omega^2\right)\left(1 - T_r^{1/2}\right)\right]^2 \qquad \ldots (24)$$

where $\omega$ is an eccentric factor.

b is a constant represented by the following expression (25):

$$b = 0.08664 \frac{RT_c}{P_c} \qquad \ldots (25)$$

where $P_c$ is critical pressure (Pa) and $T_r$ is reduced temperature represented by the following expression (26):

$$T_r = \frac{T}{T_c} \qquad \ldots (26)$$

where $T_c$ is critical temperature (K).

Note that the pressure P, the flow velocity Ug, and the density pg are each a function of the axial distance z. The physical property values of the fluid were obtained by simulation based on the gas components shown in Table. 4.

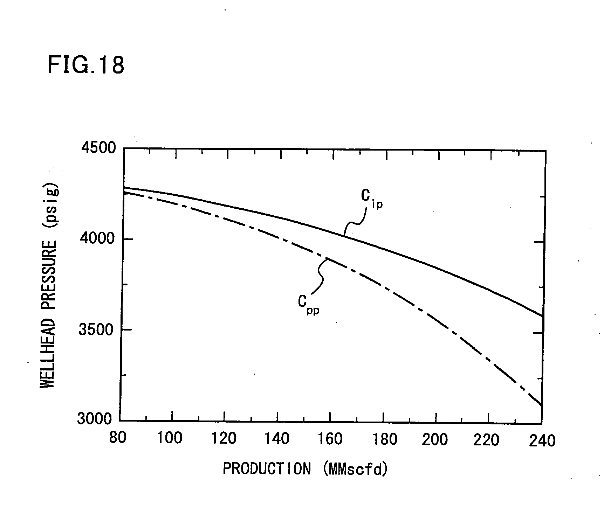

The result of simulation is shown in Fig. 18. As can be seen from Fig. 18, the gas production and the wellhead pressure of simulation No. 1 (Cip) were higher than those of simulation No. 2 (Cpp). Therefore, it was found that the gas production and the wellhead pressure of the metal pipe according to the invention (simulation No. 1) were allowed to be higher than those of the conventional metal pipe (simulation No. 2).

Although the present invention has been described and illustrated in detail, it is clearly understood that the same is by way of illustration and example only and is not to be taken by way of limitation. The invention may be embodied in various modified forms without departing from the spirit and scope of the invention.

INDUSTRIAL APPLICABILITY

The metal pipe according to the invention can find wide application as a pipe used to transport a fluid such as water, petroleum, air, and natural gas. The invention is particularly advantageously applied as a metal pipe for use in an oil well, a natural gas well, a geothermal well or the like.

**Claims**

1. A metal pipe comprising a plurality of ridges having a plurality of different heights, extending in the axial direction, and arranged in the circumferential direction at its inner circumferential surface.

2. The metal pipe according to claim 1, wherein the arithmetic mean roughness at the inner circumferential surface including said plurality of ridges in the transverse direction is in the range from 1 $\mu$m to 100 $\mu$m.

3. The metal pipe according to claim 1 or 2, wherein the heights and intervals of the plurality of ridges in the transverse direction are irregular.

4. The metal pipe according to any one of claims 1 to 3, wherein the axial length of said ridges is at least 0.03 times the inner diameter of said metal pipe.

5. A method of manufacturing a metal pipe, comprising the steps of
   inserting one end of a hollow shell into a dice;
   inserting a plug into said hollow shell, said plug including a cylindrical portion having a plurality of ridges having a plurality of different heights, extending in the axial direction, and arranged in the circumferential direction at its surface; and
   drawing said hollow shell while said dice and said plug are fixed.

6. The method according to claim 5, wherein the arithmetic mean roughness at the surface of said cylindrical portion in the transverse direction is in the range from 1 $\mu$m to 100 $\mu$m.

7. A method of manufacturing a metal pipe, comprising the steps of:

   grinding a main surface of a metal plate in the lengthwise direction, thereby forming a plurality of ridges having a plurality of different heights and extending in the lengthwise direction at said main surface; and
   welding both ends of said metal plate in the lengthwise direction so that the main surface of said metal plate forms an inner circumferential surface.

8. The method according to claim 7, wherein in the step of forming said plurality of ridges at the main surface, the arithmetic mean roughness of said main surface in the transverse direction is in the range from 1 $\mu$m to 100 $\mu$m.

FIG.1

FIG.2

AXIAL DIRECTION

FIG.3

FIG.4

FIG.5

FIG.6

FIG.7

FIG.8

DRAWING DIRECTION

FIG.9

## FIG.10

## FIG.11

ADVANCING DIRECTION

# FIG.12

EP 1 857 722 A1

# FIG.13

EP 1 857 722 A1

FIG.14

FIG.15

FIG.16

FIG.17

FIG.18

**INTERNATIONAL SEARCH REPORT**

| International application No. |
|---|
| PCT/JP2006/302839 |

A. CLASSIFICATION OF SUBJECT MATTER
*F16L9/02*(2006.01), *B21C1/24*(2006.01), *B21C37/08*(2006.01), *B21D17/04*
(2006.01), *F15D1/06*(2006.01)

According to International Patent Classification (IPC) or to both national classification and IPC

B. FIELDS SEARCHED

Minimum documentation searched (classification system followed by classification symbols)
*F16L9/02*(2006.01), *B21C1/24*(2006.01), *B21C37/08*(2006.01), *B21D17/04*
(2006.01), *F15D1/06*(2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2000-97211 A  (Dainippon Printing Co., Ltd.),<br>04 April, 2000 (04.04.00),<br>Par. Nos. [0046], [0052] to [0055]; all drawings<br>(Family: none) | 1,2<br>3,4<br>5-8 |
| Y<br>A | JP 63-28796 A  (Rolls-Royce plc),<br>06 February, 1988 (06.02.88),<br>Page 4, upper right column, line 1 to page 7,<br>lower right column, line 10; all drawings<br>& US 4930729 A1          & US 5386955 A1<br>& GB 8612485 A           & EP 246914 A1 | 3,4<br>1,2,5-8 |
| A | US 4759516 A1  (Roland D. Grose),<br>26 July, 1988 (26.07.88),<br>Full text; all drawings<br>(Family: none) | 1-8 |

☒ Further documents are listed in the continuation of Box C.   ☐ See patent family annex.

| | |
|---|---|
| \*    Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>   24 May, 2006 (24.05.06) | Date of mailing of the international search report<br>   06 June, 2006 (06.06.06) |
|---|---|
| Name and mailing address of the ISA/<br>   Japanese Patent Office | Authorized officer |
| Facsimile No. | Telephone No. |

Form PCT/ISA/210 (second sheet) (April 2005)

26

**INTERNATIONAL SEARCH REPORT**

| International application No. |
| --- |
| PCT/JP2006/302839 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 6345791 B1  (LOCKHEED MARTIN CORP.),<br>12 February, 2002 (12.02.02),<br>Full text; all drawings<br>(Family: none) | 1-8 |
| A | DE 10217111 A1  (ROME GMBH & CO. KG.),<br>06 November, 2003 (06.11.03),<br>Par. Nos. [0016] to [0033]; all drawings<br>& JP 2005-522644 A      & US 2004-155150 A1<br>& EP 1495236 A          & WO 03/087604 A1 | 1-8 |

Form PCT/ISA/210 (continuation of second sheet) (April 2005)

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11190471 A

- JP 2000097211 A

**Non-patent literature cited in the description**

- **SIROVICH, L. ; KARLSSON, S.** Turbulent drag reduction by passive mechanisms. *Nature,* 1997, vol. 388, 753

- **WALSH, M. J. ; WEINSTEIN, L. M.** Drag and Heat Transfer with Small Longitudinal Fins. *AIAA Paper,* 1978, 78-1161